# EUROPEAN PATENT APPLICATION

(11) **EP 2 878 898 A1**
(43) Date of publication of application: **03.06.2015**
(21) Application number: 13823845.6
(22) Date of filing: 24.07.2013
(51) Int. Cl.: F24J 2/08, F03G 6/00

(54) **SOLAR RAY HEAT CONVERSION DEVICE AND SOLAR HEAT POWER GENERATING SYSTEM USING SAME**

(30) Priority: 25.07.2012 JP 2012164388
(71) Applicant: Da Vinci Co., Ltd., Yamatotakada-shi, Nara 635-0071 (JP); Riken, Wako Saitama 351-0198 (JP)
(72) Inventor: HIGASHI, Kenji, Yamatotakada-shi Nara 635-0071 (JP); OHMORI, Hitoshi, Saitama 351-0198 (JP)
(74) Representative: Kuhnen & Wacker
(86) International application number: PCT/JP2013/070045
(87) International publication number: WO 2014/017539

(57) **Abstract**

A solar-to-heat conversion apparatus 20 has a polyhedral lens unit 21 which is comprised of a bottom surface member 27 and a top surface lens 22 and side surface lenses 23 to 26 formed as square Fresnel lenses of an acrylic resin and is formed in a regular hexahedral shape, and a light-receiving heating unit 30 which has a cross section in a reverse T shape formed by a bottom member 32 and an upright member 42 placed in the middle of the bottom surface member 27 inside the polyhedral lens unit 21. Without requiring a mechanism driven to follow the direction of the sun, the small-size and simple configuration enables the solar light and its reflected light to be concentrated with high efficiency from the sunrise to the sunset and generate heat.

## Description

### Technical Field

The present invention relates to a solar-to-heat conversion apparatus and a solar thermal power generation system using the same, and more specifically relates to a solar-to-heat conversion apparatus configured to concentrate the solar light and convert the concentrated solar light into thermal energy and a solar thermal power generation system using this solar-to-heat conversion apparatus.

### Background Art

With respect to this type of technology, a system of following the solar light has been widely known. This system, however, has the high cost and the large size. There is accordingly a need for a stationary system that does not follow the solar light. For example, in one proposed solar concentration apparatus, a light-receiving member in a semispherical shape having the diameter larger than the diagonal of a quadratic prism is placed with the spherical surface facing upward on a light guiding member of a quadratic prism and is integrally formed with the light guiding member from an acrylic resin. A solar cell element is placed on a bottom surface of the light guiding member, and a refractive surface is placed over the entire surface of the light-receiving member (see, for example, Patent Literature 1). In this apparatus, the solar light is refracted by the refractive surface and enters the light-receiving member. Part of the solar light entering the light-receiving member reaches the solar cell element mounted on the bottom surface of the light guiding member without being refracted by the side surface of the light guiding member. The residual part of the solar light entering the light-receiving member is theoretically refracted by the side surface of the light guiding member at the reflectance of 100% and reaches the solar cell element. Even when the angle of incidence of the solar light is slightly shifted, the extension of the light-receiving member enables most part of the solar light to reach the solar cell element via the light guiding member. This provides a wide range of allowable angle of incidence and the high irradiation uniformity to the solar cell.

Another proposed technique is a multi-layered solar lens formed by arranging a plurality of transparent annular lenses coaxially in either the radial direction or the axial direction, where the annular lenses have an identical cross sectional shape with that of a W-shaped solar lens in which an auxiliary lens in a conical shape is embedded coaxially on a bottom surface of a main lens in a reverse truncated cone shape. The multi-layered solar lens is configured to cause the light beams concentrated by the respective annular lenses to be collected by a light guiding cylinder such as to narrow the distance between the respective light rays and to be joined and concentrated again by the solar lens (see, for example, Patent Literature 2). The configuration of this multi-layered solar lens allows for thinning and weight reduction of the solar lens. In a cylindrical multi-layered solar lens stacked in the axial direction, the solar light entering from the side surface of the cylinder is concentrated. This configuration enables even the solar light at the low altitude to be concentrated.

### Citation List

### Patent Literature

PTL 1: JP 2002-280595
PTL 2: JP 2009-86059

### Summary of Invention

### Technical Problem

In the solar concentration apparatus described above, however, the light-receiving member and the light guiding member are integrally made of the acrylic resin. Increasing the light-receiving area accordingly increases the total weight. The solar light having the small angle of incidence like the rising sun or the sunset is out of the range of the allowable angle of incidence and is thus not concentrated. The multi-layered solar lens described above also has an increase in weight with an increase in light-receiving area.

A main object of the invention is to provide a solar-to-heat conversion apparatus of small-size, light-in-weight and simple configuration that efficiently concentrates the solar light and converts the concentrated solar light into thermal energy. A main object of the invention is also to provide a solar thermal power generation system of small-size, light-in-weight and simple configuration that efficiently generates electricity using the thermal energy obtained by efficiently concentrating the solar light.

### Solution to Problem

In order to achieve the main object described above, there are provided a solar-to-heat conversion apparatus and a solar thermal power generation system using the same of the following aspects.

The present invention is directed to a solar-to-heat conversion apparatus that concentrates solar light and converts the concentrated solar light into thermal energy. The solar-to-heat conversion apparatus includes a polyhedral lens unit in which at least part of surfaces forming sides of a hollow polyhedron and a surface forming a top of the polyhedron are formed by lenses having focal directions located inside of the polyhedron, and a light-receiving heating unit located inside of the polyhedral lens unit and configured to receive light from the lenses and generate heat.

In the solar-to-heat conversion apparatus of this aspect, the surface forming the top of the polyhedral lens unit and at least part of the surfaces forming the sides of the polyhedral lens unit are formed by lenses. This enables the solar light and the reflected solar light to be concentrated from not only the surface forming the top but the surfaces forming the sides. Especially the configuration of employing lenses for all the surfaces forming the sides of the polyhedral lens unit enables the light (for example, solar light and reflected solar light) to be concentrated from all the directions other than the bottom surface. Accordingly, regardless of a change in position of the sun with elapse of time, this configuration ensures efficient light concentration and heat generation. As a result, the small-size, light-in-weight and simple configuration concentrates the solar light with high efficiency and converts the concentrated solar light into thermal energy. In this aspect, the polyhedral lens unit may be in a regular hexahedral shape and all the surfaces other than the bottom surface may be formed by the lenses. This aspect ensures easy assembly of the polyhedral lens unit. Further, the lenses may be Fresnel lenses. This aspect reduces the weight of the polyhedral lens unit.

In one aspect of the solar-to-heat conversion apparatus of the invention, the light-receiving heating unit may be arranged to be located in middle of a bottom surface of the polyhedral lens unit. In this case, the light-receiving heating unit may have a plate-like bottom member and an upright member vertically stood from middle of the bottom member to include a center of the polyhedral lens unit. Further in this case, the light-receiving heating unit may be formed to have a cross section in a reverse T shape. The shape of the light-receiving heating unit may be, for example, a cylindrical column shape, a rectangular column shape or a conical shape.

In another aspect of the solar-to-heat conversion apparatus of the invention, the light-receiving heating unit may have a flow path for a heated fluid located inside or outside of the light-receiving heating unit. This aspect enables the heated fluid to be heated by the heat of the light-receiving heating unit and taken out.

According to another aspect, there is provided a solar thermal power generation system, comprising: a solar-to-heat conversion apparatus having a flow path for a heated fluid formed inside of a light-receiving heating unit, more specifically, a solar-to-heat conversion apparatus that is basically configured to concentrate solar light and convert the concentrated solar light into thermal energy, comprising: a polyhedral lens unit in which at least part of surfaces forming sides of a hollow polyhedron and a surface forming a top of the polyhedron are formed by lenses having focal directions located inside of the polyhedron; a light-receiving heating unit located inside of the polyhedral lens unit and configured to receive light from the lenses and generate heat; and a flow path for a heated fluid formed inside or outside of the light-receiving heating unit. The solar thermal power generation system uses heat of the heated fluid as a heat source of a Rankine cycle power generation system to generate electricity.

The solar thermal power generation system of this aspect includes the solar-to-heat conversion apparatus of the above aspect and accordingly has the advantageous effects of the solar-to-heat conversion apparatus of the above aspect described above, for example, the advantageous effect of concentrating the solar light and the reflected solar light not only from the surface forming the top but the surfaces forming the sides and the resulting advantageous effect of efficiently concentrating light and generating heat regardless of a change in position of the sun with elapse of time. As a result, the small-size, light-in-weight and simple configuration allows for power generation with high efficiency using the thermal energy obtained by efficiently concentrating the solar light.

In another aspect of the solar thermal power generation system of the invention, in the Rankine cycle power generation system, a working fluid having a lower boiling point than a boiling point of the heated fluid may be circulated sequentially through a pressure pump, an evaporator, a rotary heat engine equipped with a generator and a condenser, and the heat of the heated fluid is supplied to the evaporator. In this case, the heated fluid may be water. The solar thermal power generation system may further include a hot water tank, a heating flow path arranged to supply cold water accumulated in the hot water tank to the light-receiving heating unit and return heated hot water to the hot water tank, and a cooling flow path arranged to supply hot water accumulated in the hot water tank to the evaporator and return water cooled down by heat exchange with the working fluid to the hot water tank. This aspect allows for heat accumulation by using the conventional water. This aspect also enables the accumulated hot water to be supplied, thus further enhancing the energy efficiency. In the above aspect, the condenser may be configured to cool down the working fluid by water and thereby liquefy the working fluid. The solar thermal power generation system may further comprise a supply flow path arranged to supply water from the condenser to the hot water tank. This aspect further enhances the energy efficiency.

### Brief Description of Drawings

Fig. 1 is a configuration diagram illustrating the general configuration of a solar-to-heat conversion apparatus 20 according to one embodiment of the invention;
Fig. 2 is an exploded perspective view illustrating the solar-to-heat conversion apparatus 20 of the embodiment;
Fig. 3 is a cross sectional view illustrating an A-A cross section of a bottom member 32 in Fig. 2;
Fig. 4 is a cross sectional view illustrating a B-B cross section of the bottom member 32 and an upright member 42 in Fig. 2;
Fig. 5 is a graph showing a relationship of the solar light and the reflected light to the azimuth direction; and
Fig. 6 is a block diagram illustrating the general configuration of a solar thermal power generation system 100 according to an embodiment.

### Description of Embodiments

The following describes some aspects of the invention with reference to embodiments.

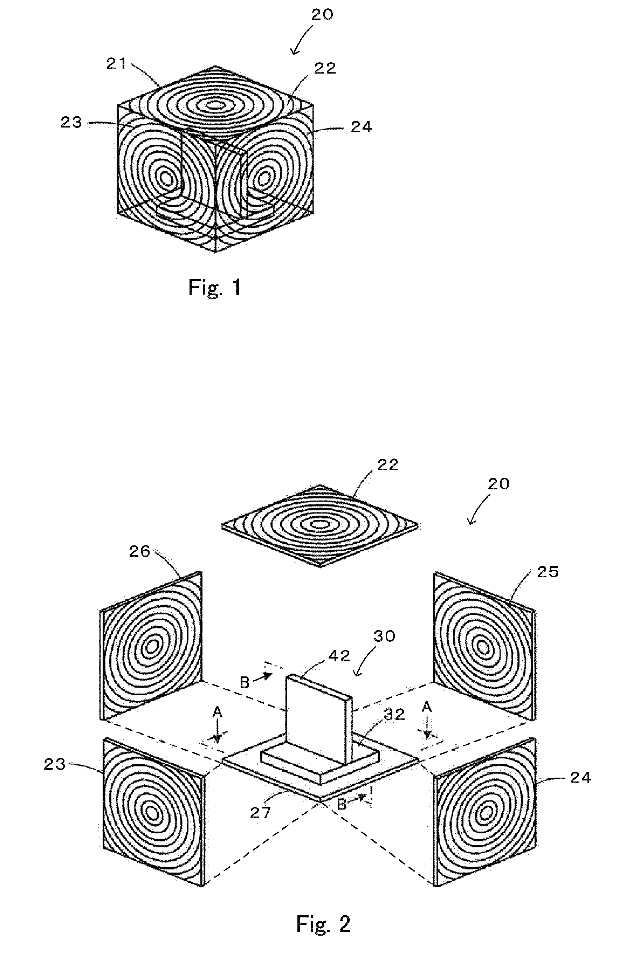

Fig. 1 is a configuration diagram illustrating the general configuration of a solar-to-heat conversion apparatus 20 according to one embodiment of the invention. Fig. 2 is an exploded perspective view illustrating the solar-to-heat conversion apparatus 20 of the embodiment. As illustrated, the solar-to-heat conversion apparatus 20 of the embodiment includes a polyhedral lens unit 21 formed in a regular hexahedral shape and a light-receiving heating unit 30 placed inside of the polyhedral lens unit 21.

The polyhedral lens unit 21 is comprised of a top surface lens 22 forming a top surface, side surface lenses 23 to 26 forming respective side surfaces and a bottom surface member 27 forming a bottom surface. The top surface lens 22 and the side surface lenses 23 to 26 may be Fresnel lenses made of, for example, an acrylic resin and formed such that the focal points to parallel light are located in the vicinity of the middle of the polyhedral lens unit 21 or farther from the middle, and are mounted such that the focal points are located inside of the polyhedral lens unit 21.

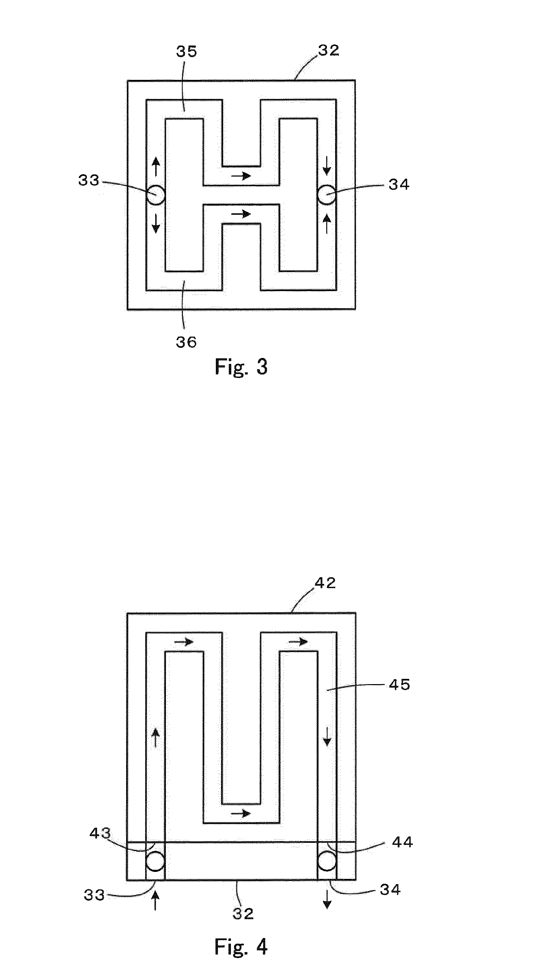

The light-receiving heating unit 30 includes a bottom member 32 placed in the middle of the bottom surface member 27 of the polyhedral lens unit 21 and a plate-like upright member 42 vertically stood in the middle of the bottom member 32 and accordingly has a cross section in reverse T shape. The bottom member 32 and the upright member 42 are made of a metal such as stainless steel or aluminum and has flow paths for a fluid such as water formed inside thereof. Fig. 3 is a cross sectional view illustrating an A-A cross section of a bottom member 32 in Fig. 2. Fig. 4 is a cross sectional view illustrating a B-B cross section of the bottom member 32 and an upright member 42 in Fig. 2. As illustrated in Figs. 3 and 4, an inlet hole 33 of the fluid from the bottom direction and an outlet hole 34 of the fluid to the bottom direction are formed as through holes in the neighborhood of both ends of the bottom member 32 where the upright member 42 is stood vertically. As shown in Fig. 3, two vertically symmetrical flow paths 35 and 36 are formed from the inlet hole 33 toward the outlet hole 34 on the A-A cross section. A flow path 45 having an inlet 43 and an outlet 44 respectively aligned with the inlet hole 33 and the outlet hole 34 of the bottom member 32 is formed on the B-B cross section of the upright member 42. Accordingly, the flow of the fluid such as water flowing in through the inlet hole 33 branches off to the three flow paths 35, 36 and 45 and joins together at the outlet hole 34 to be flowed out.

The following describes the functions of the solar-to-heat conversion apparatus 20 of the embodiment having the above configuration. It is assumed that the solar-to-heat conversion apparatus 20 of the embodiment is installed on an outdoor horizontal plane, such that the side surface lens 23 faces east and the side surface lens 25 faces west (the side surface lens 24 faces north and the side surface lens 26 faces south). In the morning, the solar light directly enters through the east-facing side surface lens 23 in the sun, the top surface lens 22 and the south-facing side surface lens 26 (in the early morning in the summer, the north-facing side surface lens 24) and is concentrated by the respective lenses 22, 23 and 26 (or 24) to be delivered to the light-receiving heating unit 30. The solar light does not directly enter, on the other hand, through the west-facing side surface lens 25 in the shade or the north-facing side surface lens 24 (in the early morning in the summer, the south-facing side surface lens 26), but the reflected light reflected from, for example, surrounding buildings enters and is concentrated by the respective lenses 24 and 25 (or 26) to be delivered to the light-receiving heating unit 30. In the afternoon, the solar light directly enters through the west-facing side surface lens 25 in the sun, the top surface lens 22 and the south-facing side surface lens 26 (in the late afternoon in the summer, the north-facing side surface lens 24) and is concentrated by the respective lenses 22, 25 and 26 (or 24) to be delivered to the light-receiving heating unit 30. The solar light does not directly enter, on the other hand, through the east-facing side surface lens 23 in the shade or the north-facing side surface lens 24 (in the later afternoon in the summer, the south-facing side surface lens 26), but the reflected light reflected from, for example, surrounding building enters and is concentrated by the respective lenses 23 and 24 (or 26) to be delivered to the light-receiving heating unit 30. The light-receiving heating unit 30 is irradiated with the concentrated solar light or the concentrated reflected solar light, so as to generate heat and heat the fluid when the fluid flows through the three flow paths 35, 36 and 45 formed inside of the light-receiving heating unit 30.

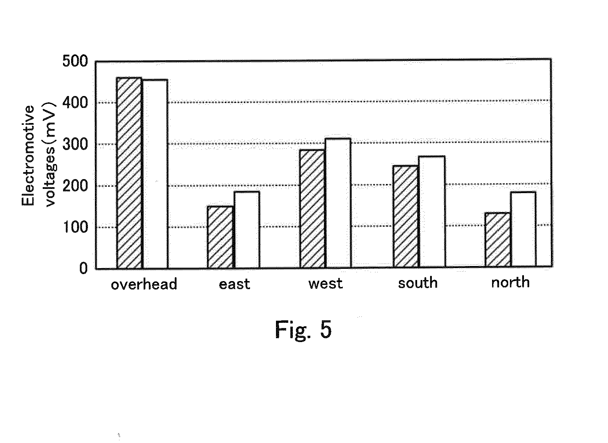

Fig. 5 is a graph showing a relationship of the electromotive voltages of the solar light and the reflected light to the azimuth direction. In an experiment, a test polyhedron produced by applying solar panels having an electromotive voltages of 500 mV at the maximum illuminance to the respective azimuth directions of an acrylic casing in a regular hexahedral shape was placed outdoors at about 1:30 pm in a clear sunny day in the spring (at temperature of 21.6°C) to be arranged such that the side surfaces respectively face east, west, south and north. In the graph, "overhead", "east", "west, "south" and "north" respectively denote the top surface, the east-facing side surface, the west-facing side surface, the sought-facing side surface and the north-facing side surface of the test polyhedron. In two bar graphs of each azimuth direction, a hatched bar graph (left bar graph) shows the electromotive voltage of the solar panel in each azimuth direction when the ground in a range of 30 cm around of the test polyhedron was covered with black rubber, in order to eliminate the reflected light from the ground, and a non-hatched bar graph (right bar graph) shows the electromotive voltage of the solar panel in each azimuth direction when the black rubber covering the ground in the range of 30 cm around of the test polyhedron was removed, in order to permit the reflected light from the ground. As illustrated in the graph, at about 1:30 pm, in the "overhead" solar panel where the angle of incidence of the solar light was relatively closer to the angle of elevation of 90 degrees, the high electromotive voltage (about 450 mV) was produced, irrespective of the presence or the absence of black rubber. In the "west" and "south" solar panels where the solar light had the smaller angles of incidence but still directly entered, the electromotive voltages produced were about 60% to 70% (about 250 mV to 300 mV) of the electromotive voltage produced in the "overhead" solar panel. In the "east" and "north" solar panels where the solar light did not directly enter, the electromotive voltages produced were about 30% to 40% (about 150 mV to 200 mV) of the electromotive voltage produced in the "overhead" solar panel. In any of such azimuth directions, the higher electromotive voltage was observed when the ground in the range of 30 cm around the test polyhedron was not covered. These results show that a certain level of electromotive voltage is produced by the solar light-induced reflected light not only in the azimuth direction where the solar light enters at the large angle ("overhead") and in the azimuth directions where the solar light enters at the smaller angles ("west" and "south") but in the azimuth directions where the solar light does not directly enter ("east" and "north"). This test polyhedron is replaceable with the solar-to-heat conversion apparatus 20 of the embodiment. The solar-to-heat conversion apparatus 20 of the embodiment accordingly enables the solar light and its reflected light to be concentrated not only in the azimuth direction where the solar light enters at the large angle ("overhead") and in the azimuth directions where the solar light enters at the smaller angles ("west" and "south") but in the azimuth directions where the solar light does not directly enter ("east" and "north") and heat the light-receiving heating unit 30.

The solar-to-heat conversion apparatus 20 of the embodiment described above has the polyhedral lens unit 21 which is comprised of the bottom surface member 27 and the top surface lens 22 and the side surface lenses 23 to 26 formed as square Fresnel lenses of the acrylic resin and is formed in the regular hexahedral shape, and the light-receiving heating unit 30 which has the cross section in the reverse T shape formed by the bottom member 32 and the upright member 42 placed in the middle of the bottom surface member 27 inside the polyhedral lens unit 21. This small-size and simple configuration enables the solar light and its reflected light to be efficiently concentrated from the sunrise to the sunset and generate heat. Additionally, employing the Fresnel lenses for the respective lenses 22 to 26 allows for weight reduction. Accordingly, the small-size, light-in-weight and simple configuration concentrates the solar light with high efficiency and converts the concentrated light into thermal energy. The light-receiving heating unit 30 is placed inside of the polyhedral lens unit 21, so that the space between the polyhedral lens unit 21 and the light-receiving heating unit 30 serves to thermally insulate the light-receiving heating unit 30 from the outside air.

In the solar-to-heat conversion apparatus 20 of the embodiment, all the surfaces of the polyhedral lens unit 21 other than the bottom surface are made by the lenses and are formed in the regular hexahedral shape. The shape of the polyhedral lens unit is, however, not limited to the regular hexahedral shape but may be the shape of a three-sided prism or a five or more-sided prism or the shape of a pyramid such as regular tetrahedron, three-sided pyramid or four-sided pyramid. All the surfaces other than the bottom surface may not be necessarily made by the lenses, but part of the surfaces in the shade may be not made by the lens.

In the solar-to-heat conversion apparatus 20 of the embodiment, the respective lenses 22 to 26 are the Fresnel lenses made of the acrylic resin but may be Fresnel lenses made of, for example, glass. The respective lenses 22 to 26 may be convex lenses.

In the solar-to-heat conversion apparatus 20 of the embodiment, the light-receiving heating unit 30 is formed in the reverse T shape by the bottom member 32 and the upright member 42. The light-receiving heating unit 30 may, however, be any shape other than the reverse T shape as long as the shape allows for irradiation with the concentrated light: for example, a shape made by a columnar member such as a cylindrical column or a rectangular column vertically stood in the middle of a bottom member, a conical shape or a pyramid shape such as three-sided pyramid or four-sided pyramid.

In the solar-to-heat conversion apparatus 20 of the embodiment, the three flow paths 35, 36 and 45 are formed as the flow paths for the fluid inside of the light-receiving heating unit 30. One single flow path, two flow paths or four or more flow paths may be formed. As long as the flow paths are heated by the light-receiving heating unit 30, the flow paths for the fluid may be formed on the outer wall of the light-receiving heating unit in a heat exchangeable manner.

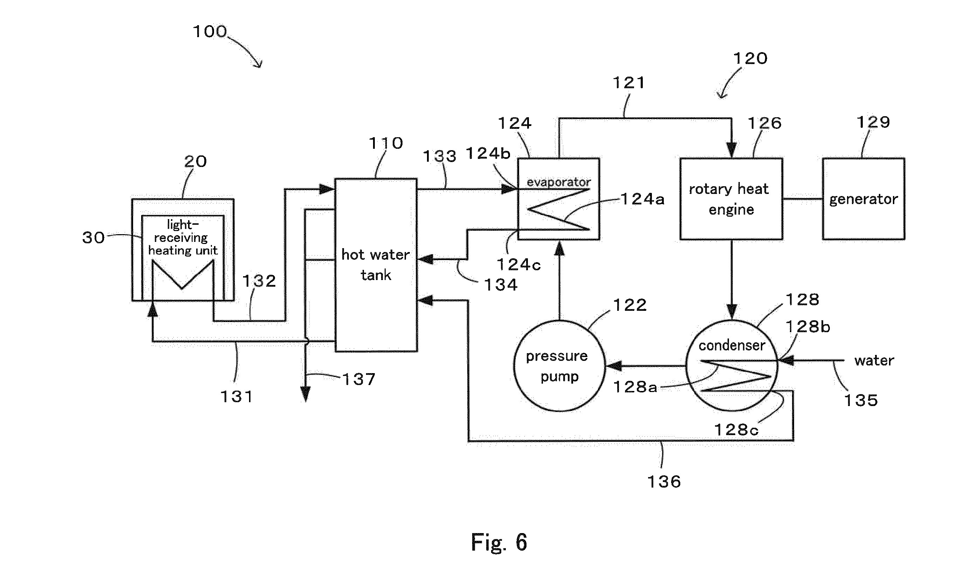

The following describes a solar thermal power generation system 100 including the solar-to-heat conversion apparatus 20 of the embodiment. Fig. 6 is a block diagram illustrating the general configuration of the solar thermal power generation system 100 of the embodiment. The solar thermal power generation system 100 of the embodiment includes the solar-to-heat conversion apparatus 20, a hot water tank 110 configured to store hot water heated by the solar-to-heat conversion apparatus 20 and a Rankine cycle power generation system 120 configured to generate electricity using the hot water from the hot water tank 110.

In the hot water tank 110, the water having the highest temperature (hot water) is accumulated in a top most section, and the water having the lowest temperature (cold water) is accumulated in a bottom most section, according to the relationship between the specific gravity and the temperature. For the matter of convenience, in the description below, an upper section including the top most section is called hot water section, a lower section including the bottom most section is called cold water section, and a middle section is called warm water section.

The cold water section of the hot water tank 110 is connected with the inlet hole 33 of the light-receiving heating unit 30 of the solar-to-heat conversion apparatus 20 by a cold water supply tube 131. The outlet hole 34 of the light-receiving heating unit 30 of the solar-to-heat conversion apparatus 20 is connected with the hot water section of the hot water tank 110 by a hot water return pipe 132. Accordingly, water (cold water) is supplied from the hot water tank 110 to the light-receiving heating unit 30 of the solar-to-heat conversion apparatus 20, is heated by the light-receiving heating unit 30 of the solar-to-heat conversion apparatus 20 and is returned as the hot water to the hot water section of the hot water tank 110.

The Rankine cycle power generation system 120 forms a cycle of circulating a working fluid having a lower boiling point than that of water (for example, CFC substitute) in a circulation flow path 121. The circulation flow path 121 is equipped with a pressure pump 122 operated to pressurize the working fluid, an evaporator 124 configured to evaporate and vaporize the pressurized working fluid, a rotary heat engine 126 operated to rotate and drive a driveshaft linked with a generator 129 by a pressure difference between the working fluid of the supplied gas and the working fluid of the discharged gas, and a condenser 128 configured to liquefy the working fluid discharged from the rotary heat engine 126.

The evaporator 124 has a heat exchange flow path 124a where heat exchange is performed for vaporization of the working fluid. An inlet 124b of the heat exchange flow path 124a is connected with the hot water section of the hot water tank 110 by a hot water supply tube 133, and an outlet 124c of the evaporator 124 is connected with the warm water section of the hot water tank 110 by a warm water return pipe 134. Accordingly, hot water is supplied from the hot water tank 110 to the evaporator 124, and the warm water cooled down by the heat exchange with the working fluid is returned to the warm water section of the hot water tank 110.

The condenser 128 has a heat exchange flow path 128a where heat exchange is performed for liquefaction of the working fluid. An inlet 128b of the heat exchange flow path 128a is connected with a cold water supply tube 135 through which cold water (for example, tap water) is supplied from outside of the system, and an outlet 128c of the heat exchange flow path 128a is connected with a lower part of the warm water section (or an upper part of the cold water section) of the hot water tank 110 by a cold/hot water supply tube 136. Accordingly, cold water is supplied from outside of the system to the condenser 128, and the cold/hot water heated by the heat exchange with the working fluid is supplied to the lower part of the warm water section (or the upper part of the cold water section) of the hot water tank 110.

The rotary heat engine 126 is provided as a heat engine configured to rotate and drive the generator 129 by even a slight pressure difference and is operated at the temperature difference of about 50°C.

Hot water supply tubes 137 for hot water supply are attached to the hot water section and the warm water section of the hot water tank 110, in order to adjust the temperature of hot water to a desired temperature by mixing the excess hot water or warm water in the hot water tank 110 with tap water and supply the hot water of the desired temperature.

In the solar thermal power generation system 100 of the embodiment, the solar-to-heat conversion apparatus 20 is operated to heat the cold water from the sunrise to the sunset and store the heated hot water in the hot water tank 110. In response to a need for electric power, the hot water stored in the hot water tank 110 is supplied to the evaporator 124, and the Rankine cycle power generation system 120 is activated to generate electricity.

In the solar thermal power generation system 100 of the embodiment described above, the solar-to-heat conversion apparatus 20 is used to concentrate the solar light with high efficiency and convert the concentrated light into thermal energy, which is stored in the form of heat in the hot water tank 110, and the Rankine cycle power generation system 120 is activated to generate electricity as needed basis. This configuration enables the electric power to be obtained as needed, irrespective of the presence or the absence of the solar light. The configuration of returning the warm water cooled down by the evaporator 124 to the hot water tank 110, supplying the cold/hot water heated by the condenser 128 to the hot water tank 110 and supplying the hot water or the warm water stored in the hot water tank 110 enhances the energy efficiency of the entire system.

In the solar thermal power generation system 100 of the embodiment, the warm water cooled down by the evaporator 124 is returned to the hot water tank 110, and the cold/hot water heated by the condenser 128 is supplied to the hot water tank 110. The warm water cooled down by the evaporator 124 or the cold/hot water heated by the condenser 128 may be supplied to another location, for example, may be supplied directly. The solar thermal power generation system 100 of the embodiment is configured to supply the hot water or the warm water stored in the hot water tank 110 but may alternatively be configured not to supply the hot water or the warm water from the hot water tank 110.

In the solar thermal power generation system 100 of the embodiment, the Rankine power generation system 120 has the pressure pump 122, the evaporator 124, the rotary heat engine 126 and the condenser 128 provided on the circulation flow path 121 which the working fluid is circulated in. According to one modification, a condenser and a steam turbine equipped with a pressure pump, a heater and a generator may be provided on the circulation flow path.

In the solar thermal power generation system 100 of the embodiment, water is used as the fluid to be heated by the solar-to-heat conversion apparatus 20, and the fluid having the lower boiling point than that of water (for example, CFC substitute) is used as the working fluid for the Rankine cycle power generation system 120. The fluid to be heated by the solar-to-heat conversion apparatus 20 may be a heated fluid other than water, and the working fluid for the Rankine cycle power generation system 120 may be a fluid having a lower boiling point than that of the heated fluid. In the latter case, the hot water tank 110 for storing hot water may be replaced by a heat accumulator which accumulates the heated fluid but does not supply hot water.

The embodiment discussed above is to be considered in all aspects as illustrative and not restrictive. There may be many modifications, changes, and alterations without departing from the scope or spirit of the main characteristics of the present invention. The scope and spirit of the present invention are indicated by the appended claims, rather than by the foregoing description.

### Industrial Applicability

The invention is applicable to the manufacturing industries of solar-to-heat conversion apparatus and the solar thermal power generation system.

## Claims

1. A solar-to-heat conversion apparatus that concentrates solar light and converts the concentrated solar light into thermal energy, comprising:
a polyhedral lens unit in which at least part of surfaces forming sides of a hollow polyhedron and a surface forming a top of the polyhedron are formed by lenses having focal directions located inside of the polyhedron; and
a light-receiving heating unit located inside of the polyhedral lens unit and configured to receive light from the lenses and generate heat.

2. The solar-to-heat conversion apparatus according to claim 1,
wherein the polyhedral lens unit is in a regular hexahedral shape and has all surfaces other than a bottom surface formed by lenses.

3. The solar-to-heat conversion apparatus according to either claim 1 or claim 2,
wherein the lenses are Fresnel lenses.

4. The solar-to-heat conversion apparatus according to any one of claims 1 to 3,
wherein the light-receiving heating unit is arranged to be located in middle of a bottom surface of the polyhedral lens unit.

5. The solar-to-heat conversion apparatus according to claim 4,
wherein the light-receiving heating unit has a plate-like bottom member and an upright member vertically stood from middle of the bottom member to include a center of the polyhedral lens unit.

6. The solar-to-heat conversion apparatus according to claim 5,
wherein the light-receiving heating unit is formed to have a cross section in a reverse T shape.

7. The solar-to-heat conversion apparatus according to any one of claims 1 to 6,
wherein the light-receiving heating unit has a flow path for a heated fluid located inside or outside of the light-receiving heating unit.

8. A solar thermal power generation system, comprising:
the solar-to-heat conversion apparatus according to claim 7,
the solar thermal power generation system using heat of the heated fluid as a heat source in a Rankine cycle power generation system to generate electricity.

9. The solar thermal power generation system according to claim 8,
wherein in the Rankine cycle power generation system, a working fluid having a lower boiling point than a boiling point of the heated fluid is circulated sequentially through a pressure pump, an evaporator, a rotary heat engine equipped with a generator and a condenser, and
the heat of the heated fluid is supplied to the evaporator.

10. The solar thermal power generation system according to claim 9,
wherein the heated fluid is water,
the solar thermal power generation system further comprising:
a hot water tank;
a heating flow path arranged to supply cold water accumulated in the hot water tank to the light-receiving heating unit and return heated hot water to the hot water tank; and
a cooling flow path arranged to supply hot water accumulated in the hot water tank to the evaporator and return water cooled down by heat exchange with the working fluid to the hot water tank.

11. The solar thermal power generation system according to claim 10,
wherein the condenser is configured to cool down the working fluid by water and thereby liquefy the working fluid,
the solar thermal power generation system further comprising:
a supply flow path arranged to supply water from the condenser to the hot water tank.
